# DEMANDE DE BREVET EUROPEEN

(11) **EP 1 087 574 A1**
(43) Date de publication de la demande: **28.03.2001**
(21) Numéro de dépôt: 00402565.6
(22) Date de dépôt: 18.09.2000
(51) Int. Cl.: H04L 12/46, G06F 13/14, H04L 12/44

(54) **Routeur à hub intégré**

(30) Priorité: 24.09.1999 FR 9911938
(71) Demandeur: SAGEM SA, 75116 Paris (FR)
(72) Inventeur: Teboulle, Henri, 94700 Maisons-Alfort (FR)
(74) Mandataire: Fruchard, Guy

(57) **Abrégé**

Le routeur comporte un microprocesseur (2) associé d'une part à un réseau principal et d'autre part à une première borne de connexion (4) d'un réseau local par l'intermédiaire d'une interface (5, 6) pouvant fonctionner à un débit bas ou un débit élevé, une série de bornes de connexion supplémentaires (8) montées en parallèle et équipées d'une interface (10) pouvant fonctionner à un débit bas seulement, et un interrupteur (11) permettant de relier la série de bornes de connexion supplémentaires (8) en parallèle à la première borne de connexion (4) lors d'une détection de connexion à la première borne de connexion (4) d'un organe fonctionnant au débit bas.

## Description

La présente invention concerne un routeur ou pont à hub intégré, destiné à assurer une liaison entre un réseau principal et un réseau local.

Dans la présente description, on utilisera seulement le terme de routeur, mais il est entendu que l'invention s'applique également aux ponts à hub intégré.

On sait que lorsque l'on souhaite associer un réseau principal à un réseau local, il est nécessaire de prévoir un routeur comportant un microprocesseur associé d'une part au réseau principal et d'autre part au réseau local. Dans les systèmes actuels, le routeur est généralement associé au réseau local par l'intermédiaire d'au moins un boîtier répétiteur/répartiteur (habituellement dénommé "hub" par les professionnels) séparé du routeur et relié à celui-ci. Le hub est relié selon l'importance du réseau local soit à d'autres hubs soit directement à des ordinateurs afin d'assurer une connexion avec le routeur et permettre et réaliser des liaisons entre les ordinateurs du réseau local et le réseau principal.

L'installation d'un réseau local suppose donc d'une part l'installation du routeur et des hubs, et d'autre part le câblage des hubs avec le routeur.

Afin de simplifier la fabrication, les routeurs sont généralement prévus pour pouvoir être associés à des réseaux locaux de dimensions très variables pouvant fonctionner à deux débits différents, par exemple un débit bas de 10 Mbps ou un débit élevé de 100 Mbps, ou encore un débit bas de 100 Mbps ou un débit élevé de 1000 Mbps. Dans le cas d'un fonctionnement à un débit élevé, le réseau local comprend généralement un nombre relativement grand d'utilisateurs, ce qui implique une répartition pyramidale par une série de hubs. Dans ce cas il est donc nécessaire d'installer les hubs en différents points de répartition afin de les relier soit aux hubs de la couche suivante dans la répartition pyramidale, soit aux ordinateurs locaux. Au contraire, dans le cas d'un réseau local fonctionnant à débit bas, celui-ci comporte généralement un faible nombre d'utilisateurs, de sorte que l'installation d'un hub séparé du routeur constitue une contrainte souvent inutile tant en terme d'encombrement qu'en terme de temps passé par le technicien chargé de l'installation.

Selon l'invention on prévoit un routeur comportant un microprocesseur associé d'une part à un réseau principal et d'autre part à une première borne de connexion d'un réseau local par l'intermédiaire d'une interface pouvant fonctionner à un débit bas ou un débit élevé, le routeur comportant une série de bornes de connexion supplémentaires montées en parallèle et équipées d'une interface pouvant fonctionner au débit bas seulement, et un interrupteur permettant de relier la série de bornes de connexion supplémentaires en parallèle à la première borne de connexion du réseau local lors d'une détection d'une connexion à la première borne de connexion d'un organe fonctionnants au débit bas. Ainsi, lorsque le nombre d'ordinateurs du réseau local ne dépasse pas le nombre de bornes de connexion du routeur, l'installation du réseau local est effectuée sans hub séparé. En tout état de cause la série de bornes supplémentaires intégrées au routeur permet de minimiser le nombre de hubs séparés à installer.

Selon une version avantageuse de l'invention, la détection de la connexion d'un organe fonctionnant au débit bas est effectuée automatiquement par le microprocesseur du routeur. Ainsi, la mise en service des bornes de connexion supplémentaires est réalisée dès le branchement d'un organe à la première borne de connexion du réseau local.

D'autres caractéristiques et avantages de l'invention apparaîtront à la lecture de la description qui suit d'un mode de réalisation particulier non limitatif d'un réseau local associé à un routeur selon l'invention.

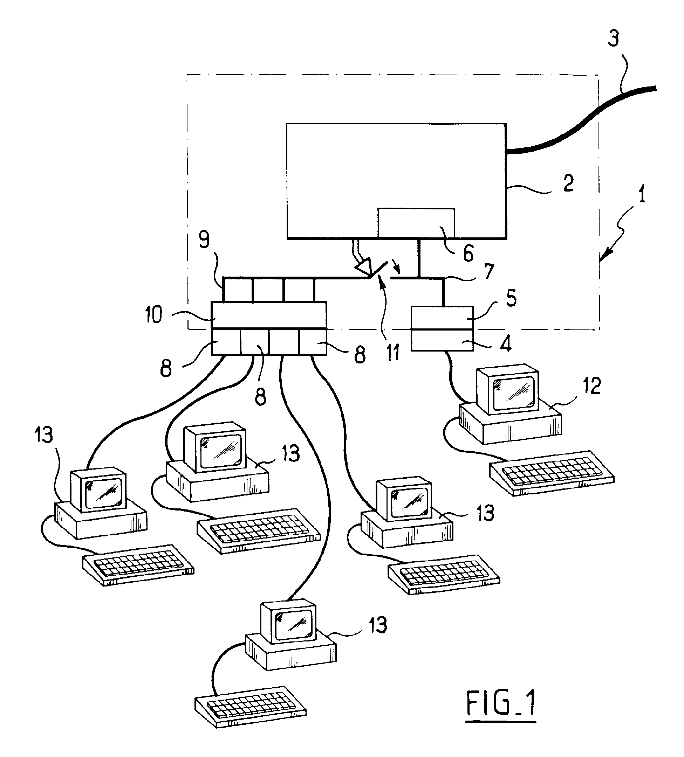

En référence à la figure, le routeur selon l'invention, généralement désigné en 1, comporte un microprocesseur 2 associé d'une part à un réseau principal représenté par un trait épais 3 sur la figure, et d'autre part à une première borne de connexion 4 du réseau local par l'intermédiaire d'une interface ligne 5 pouvant fonctionner soit à un débit bas soit à un débit élevé, et reliée à une interface 6 du microprocesseur 2 par une ligne 7.

Par ailleurs, le routeur comporte une série de quatre bornes de connexion supplémentaires 8 montées en parallèle sur une ligne 9 et associées à une interface ligne 10 pouvant fonctionner à un débit bas seulement. Un interrupteur 11 commandé par le microprocesseur 2 est disposé entre la ligne de liaison parallèle 9 des bornes de connexion supplémentaires 8 et la ligne 7 de liaison de la première borne de connexion 4 à l'interface 6 du microprocesseur 2.

Lors de l'installation du réseau local, l'interrupteur 11 est automatiquement mis en position ouverte. Lors du branchement d'un premier organe, par exemple un ordinateur 12, à la première borne de connexion 4, le mode de fonctionnement de celui-ci, en débit bas ou en débit élevé par référence aux deux débits auxquels le routeur peut fonctionner, est détecté et l'interrupteur 11 est commandé en conséquence. Dans le mode de réalisation illustré l'ordinateur 12 fonctionne à débit bas et l'interrupteur 11 est donc fermé automatiquement comme illustré, par une flèche épaisse sur la figure. Il est alors possible de brancher d'autres organes sur les bornes de connexion supplémentaires 8. Dans le mode de réalisation illustré, les organes sont des ordinateurs 13 branchés directement sur l'une des bornes de connexion supplémentaires 8.

Si l'organe branché sur la première borne de connexion 4, qu'il s'agisse d'un hub ou d'un ordinateur, fonctionne à un débit élevé l'interrupteur 11 reste ouvert, ce qui évite toute perturbation si un organe est branché accidentellement à l'une des bornes de connexion supplémentaires 8.

Bien entendu, l'invention n'est pas limitée au mode de réalisation décrit et on peut y apporter des variantes de réalisation sans sortir du cadre de l'invention tel que défini par les revendications.

En particulier, bien que le routeur selon l'invention ait été illustré avec quatre bornes de connexion supplémentaires, on peut prévoir un nombre de bornes de connexion supplémentaires différent en fonction de la gamme de dimensions du réseau local devant être connecté au routeur.

Si le réseau local comporte un nombre d'utilisateurs supérieur au nombre total des bornes de connexion au réseau local tout en fonctionnant en débit bas, on peut prévoir un ou plusieurs hubs reliés indifféremment à la borne de connexion 4 ou à l'une des bornes de connexion 8.

On peut également prévoir un interrupteur 11 à commande manuelle monté sur le boîtier du routeur afin de simplifier les circuits électroniques du routeur.

## Revendications

1. Routeur comportant un microprocesseur (2) associé d'une part à un réseau principal et d'autre part à une première borne de connexion (4) d'un réseau local par l'intermédiaire d'une interface (5, 6) pouvant fonctionner à un débit bas ou un débit élevé, caractérisé en ce qu'il comporte une série de bornes de connexion supplémentaires (8) montées en parallèle et équipées d'une interface (10) pouvant fonctionner à un débit bas seulement, et un interrupteur (11) permettant de relier la série de bornes de connexion supplémentaires (8) en parallèle à la première borne de connexion (4) du réseau local lors d'une détection de connexion à la première borne de connexion (4) d'un organe fonctionnant au débit bas.

2. Routeur selon la revendication 1, caractérisé en ce que la détection de la connexion d'un organe fonctionnant au débit bas est effectuée automatiquement par le microprocesseur (2).
